# EUROPEAN PATENT APPLICATION

(11) **EP 2 019 444 A2**
(43) Date of publication of application: **28.01.2009**
(21) Application number: 08019943.3
(22) Date of filing: 05.04.2005
(51) Int. Cl.: H01M 8/04, H01M 8/24

(54) **Fuel release management for fuel cell systems**

(30) Priority: 05.04.2004 US 559670 P
(62) Divisional of application: 05736394.7
(71) Applicant: Daimler AG, 70327 Stuttgart (DE); Ford Motor Company, Dearborn, MI 48126 (US)
(72) Inventor: Sederquist, Richard A., Middletown CT 06457 (US); Blaszczyk, Janusz, British Columbia V7C 5R8 (CA); Procter, Michael J., British Columbia V7N 1E8 (CA); Fleck, Wolfram, 73760 Ostfildern-Scharnhausen (DE)
(74) Representative: Schicker, Silvia

(57) **Abstract**

Methods and apparatus for fuel release mitigation including enclosing a fuel cell stack within an enclosure, supplying oxidant to the enclosure, circulating the oxidant within the enclosure to mix with any fuel present in the enclosure, withdrawing circulated oxidant from the enclosure; and supplying at least a portion of the circulated oxidant withdrawn from the enclosure to the stack as the cathode inlet stream.

## Description

### BACKGROUND OF THE INVENTION

### Field of the Invention

The invention relates to methods and systems for improved management of fuel releases from fuel cell systems, and, more particularly, to methods and systems employing oxidant delivery to mitigate the effect of fuel releases in fuel cell systems.

### Description of the Prior Art

Fuel cell systems are presently being developed for use as power supplies in a wide variety of applications, such as stationary power plants and portable power units. Such systems offer the promise of economically delivering power while providing environmental benefits.

Fuel cells convert fuel and oxidant reactants to generate electric power and reaction products. Typical fuels include hydrogen and hydrocarbons such as natural gas, methanol or gasoline reformate, while suitable oxidants include air and oxygen. Fuel cells generally employ an electrolyte disposed between cathode and anode electrodes. A catalyst typically induces the desired electrochemical reactions at the electrodes.

Hydrogen utilization is a consideration in fuel cell electric power plants. For example, U. S. Patent No. 6,124,054 discloses that in a typical polymer electrolyte membrane (PEM) fuel cell, the hydrogen content in the anode exhaust may be 50% - 90%. This is partly the result of supplying hydrogen to the fuel cells in amounts in excess of stoichiometric requirements in order to avoid fuel starvation conditions. Nonetheless, simply venting the anode exhaust into the environment may not be acceptable: this.wastes hydrogen fuel and venting hydrogen-containing exhaust may not be tolerated in certain applications.

Some conventional fuel cell electric power plants have employed closed hydrogen supply systems in order to increase hydrogen utilization. In this context, closed hydrogen supply systems include dead-ended systems and systems employing anode exhaust recycling. In closed systems, generally, the concentration of any impurities present in the hydrogen stream supplied to the stack will increase over time; this can have adverse effects on fuel cell performance. In applications where the oxidant is supplied by air, inert gases, particularly nitrogen, also permeate across the membrane from the cathode side to the anode side of the fuel cells. Fuel cell performance decreases over time as the concentration of inert gases increases, and can lead to cell failure if fuel starvation conditions develop. In power plants where pressurized air is supplied to the stack this problem is further exacerbated by the corresponding increased permeation rate of inert gas across the membrane. In addition, as water vapor accumulates in the anode flow fields liquid water can condense, which may result in flooding of the fuel cell. Accordingly, such power plants generally purge the anodes of the accumulated inert gas, impurities and/or liquid water. Purging is generally performed periodically, although continuous purging is also possible.

Fuel leakage or release may occur unintentionally or intentionally during normal operation of a PEM fuel cell. Examples of unintended releases may include leakage from seals, fuel cell power plant ancillaries, pumps, valves, plumbing or other system components. Where the fuel cell electric power plant employs a closed hydrogen supply system, intended releases may include periodic or continuous purging of the fuel side of the system. Combustion of fuel and oxidant may occur if the fuel releases are not controlled.

Various methods have been proposed for mitigating the effect of these releases. For example, U. S. 2003/77488 discloses a discharged fuel diluter which includes a retention region with a predetermined volume, into which a fuel discharged from a fuel cell is retained at the time of purging; a dilution region with a predetermined volume, through which air discharged from the fuel cell flows and at which the air is mixed with the fuel from the retention region to dilute the fuel; and a communicating portion, through which the fuel flows from the retention region to the dilution region. One disadvantage with systems such as that in U. S. 2003/77488 is that the system deals only with intentional releases, i.e., only those from the purge system, and provides no means of addressing other releases, such as unintentional releases that may occur from, for example, seal leaks or other parts of the fuel cell system. In addition, devices such as the fuel diluter of U. S. 2003/77488 may be susceptible to external ignition, such as from a spark.

U. S. Patent No. 5,856,034 discusses a conventional fuel cell system formed by a stack of fuel cells surrounded by a protective housing (see Figure 3 of U.S. 5,856,034). The fuel cell system has an anode input for supplying combustion gas to the anodes of the fuel cell stack on the left side of the fuel cell system, an anode output for carrying away the burnt combustion gas from the anodes on the right side of the fuel cell stack, a cathode input for supplying cathode gas to the cathodes of the fuel cell stack on the front of the latter, as well as a cathode output to carry away the used cathode gas from the cathodes on the back of the fuel cell stack. To supply and carry away the combustion gas and the cathode gas to and from the respective inputs and outputs of the anodes and cathodes, a combustion gas inlet hood is placed over the anode input, a combustion gas outlet hood is placed over the anode output, a cathode gas inlet hood is placed over the cathode input, and a cathode gas outlet hood is placed over the cathode output, each of which is sealed off from the fuel cell stack. The inlets and outlets to these gas inlet and gas outlet hoods are guided outward through the protective housing in a manner not shown in greater detail in Figure 3 of U. S. Patent No. 5,856,034 through equalizing bellows for compensating the lengthwise expansions caused by the temperature differentials.

The combustion gas is supplied to the anode input through the feed to the combustion gas inlet hood from a gas supply unit not shown in Figure 3 of U.S. Patent No. 5,856,034. The cathode gas is fed to the cathode input of a hot gas blower. The used cathode gas is carried away from the cathode outlet located opposite the cathode inlet and the burnt combustion gas carried away from the anode outlet located opposite the anode inlet is mixed as an anode exhaust gas with the used cathode gas in an anode gas mixer. The stream of cathode exhaust gas together with the added anode exhaust gas is first guided through a catalytic burner and then a heat exchanger to decouple the useful heat. The outlet of the heat exchanger is connected with the inlet of the hot gas blower so that the circuit for the cathode gas stream is completed. Downstream from the heat exchanger, the surplus cathode exhaust gas is removed from the cathode gas stream though an exhaust flap and replaced by fresh air supplied by a fresh air blower.

Such an arrangement is problematic in that as each of the fuel and oxidant inlet and outlet manifolds are intentionally sealed off from the interior of the housing, any leaks from the system will build up inside the enclosure. No means of venting any built up fuel from the enclosure is contemplated.

U. S. Patent No. 5,856,034 proposes an alternative method and apparatus for controlling gas circulation in a fuel cell system in which a stack of fuel cells is surrounded by a protective housing. Used cathode gas and burnt combustion gas from the fuel cell stack directly into the interior of a protective housing which surrounds the fuel cell stack. A blower which is arranged inside the housing causes the used cathode gas to mix with the burnt combustion gas and recirculate to the cathode input of the fuel cell stack, where it is further mixed with fresh gas from the exterior. U. S. Patent No. 6,455,183 proposes a similar scheme, in which reactant air is drawn through a fuel cell stack by a pump connected to the air exhaust manifold. The fuel exhaust may be connected to the air exhaust before' either being released to atmosphere through a duct, or consumed in a catalytic converter. The fuel cell power plant may be disposed within a casing so that the fuel exhaust and/or all fuel leaks may mix with the fresh incoming air and be reacted on the cathode catalysts to form water.

A significant disadvantage of systems such as those proposed in U.S. Patent Nos. 5,856,034 and 6,455,183 is that there is no assurance that the fuel will be adequately mixed with the air. There is a risk of "short-circuiting" in such systems, for example a fuel release may pass directly to the cathode before mixing can occur. Thus, local fuel releases may be in close proximity to a catalytic ignition source, but cannot be completely mixed and diluted with the incoming air before contacting the cathode catalyst. Accordingly, there is a risk that a local fuel release will be mixed only with local ventilation air or only a small portion of the incoming air, and may result in a flammable mixture reaching the catalyst. This may produce ignition, propagation of a flame back to the point of the release, high local heat generation and/or damage to or failure of the system. In other instances, incomplete mixing of the fuel with only a small portion of the incoming air may allow non-uniform fuel/oxidant mixtures that could exceed the flammability limits to collect in local spots within the enclosure. If such non-uniform fuel/oxidant mixtures reach the cathode without further mixing or dilution, they may lead to local temperature increases at the cathode catalyst. These "hotspots" may result in sintering of the catalyst, loss of activity or damage to the catalyst structure.

Given these difficulties, there remains a need in the art to develop fuel cell systems that mitigate fuel releases by consistently mixing and diluting them. The present systems address these and other needs, and provide further related advantages.

### BRIEF SUMMARY OF THE INVENTION

The invention relates to methods and systems for improved management of fuel releases from fuel cell systems, and, more particularly, to methods and systems employing oxidant delivery to mitigate the effect of fuel releases in fuel cell systems.

In one embodiment, a method of operating a fuel cell system, the fuel cell system comprising an enclosure and a fuel cell stack disposed inside the enclosure, the method comprising supplying fuel to the stack via an anode inlet, supplying oxidant to the enclosure, circulating the oxidant within the enclosure to mix with any fuel present in the enclosure, withdrawing circulated oxidant from the enclosure, and supplying at least a portion of the circulated oxidant withdrawn from the enclosure to the stack via a cathode inlet.

In another embodiment, a fuel cell system comprising a fuel cell stack comprising a fuel supply passage and an oxidant supply passage, the fuel supply passage comprising an anode inlet for directing a fuel stream to the fuel cell stack, the oxidant supply passage comprising a cathode inlet for directing an oxidant stream to the fuel cell stack, and an enclosure disposed around the fuel cell stack, the enclosure comprising an enclosure inlet passage in fluid communication with the interior of the enclosure for introducing oxidant into the enclosure, and an enclosure outlet passage fluidly connected to the cathode inlet, for directing oxidant out of the enclosure and to the cathode inlet.

These and other aspects of the present methods and systems will be apparent upon reference to the attached figures and following detailed description.

### BRIEF DESCRIPTION OF THE DRAWINGS

In the figures, identical reference numbers identify similar elements or acts. The sizes and relative positions of elements in the figures are not necessarily drawn to scale. For example, the shapes of various elements and angles are not drawn to scale, and some of these elements are arbitrarily enlarged and positioned to improve figure legibility. Further, the particular shapes of the elements, as drawn, are not intended to convey any information regarding the actual shape of the particular elements, and have been solely selected for ease of recognition in the figures.

Figure 1 is a schematic diagram of a solid polymer electrolyte fuel cell series stack and an oxidant delivery system according to one embodiment of the present systems and methods.

Figure 2 is a schematic diagram of a solid polymer electrolyte fuel cell series stack and an oxidant delivery system according to another embodiment of the present systems and methods.

Figure 3 is a schematic diagram of a solid polymer electrolyte fuel cell series stack and an oxidant delivery system according to another embodiment of the present systems and methods.

Figure 4 is a schematic diagram of one embodiment of a purge device that may be employed as part of the present systems and methods.

### DETAILED DESCRIPTION OF THE INVENTION

In the following detailed description, certain specific details are set forth in order to provide a thorough understanding of various embodiments of the invention. However, one skilled in the art will understand that the invention may be practiced without these details. In other instances, well known structures associated with fuel cell stacks and fuel cell systems including, but not limited to, control systems including microprocessors have not been described in detail to avoid unnecessarily obscuring the descriptions of the embodiments of the invention.

Unless the context requires otherwise, throughout the specification and claims which follow, the word "comprise" and variations thereof, such as "comprises" and "comprising" are to be construed in an open, inclusive sense, that is as "including but not limited to".

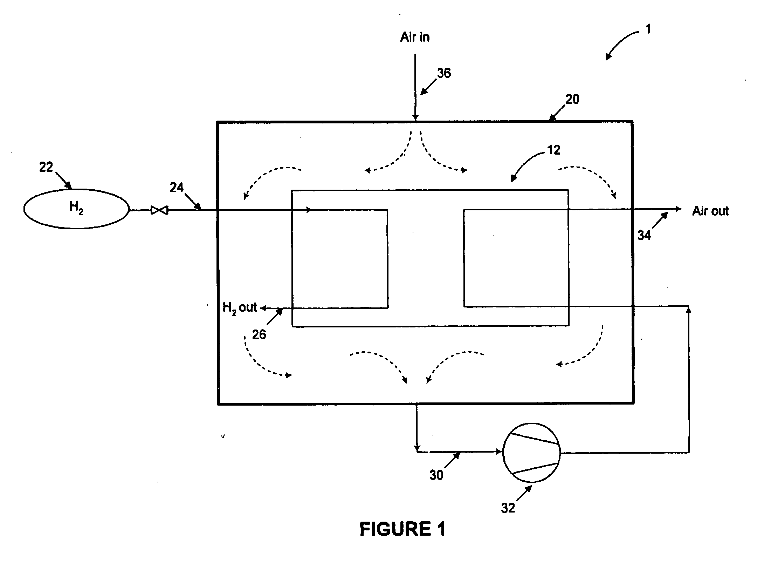

An exemplary fuel cell system 1 is shown schematically in Figure 1. Fuel cell system 1 comprises a fuel cell stack 12, which is composed of at least one fuel cell and typically is composed of a plurality of stacked fuel cells. Fuel cell stack 12 is disposed in an enclosure 20. During operation, fuel from a fuel source 22 is supplied to the anode (s) fuel cell stack 12 via fuel inlet passage 24. Fuel exhaust leaves fuel cell stack 12 via fuel outlet passage 26 and is continuously discharged to enclosure 20. Air from the ambient environment is drawn into enclosure 20 through one or more air inlet passages 36 (only a single passage is shown in Figure 1 for simplicity). If desired, a filter (not shown) may be associated with air inlet passage 36 to remove any particulates or other impurities from the ambient air that may be harmful to fuel cell system 1. The incoming plant air, having swept up and mixed with the released fuel present in enclosure 20, is drawn into air supply passage 30 and a circulation device, such as a blower 32, where the released fuel is further mixed with the incoming plant air. Those of skill in the art will appreciate that other circulation devices, such as a fan or a pump, may be employed. Air supply passage 30 is fluidly connected to and configured to supply air to the cathode (s) fuel cell stack 12. Air exhaust leaves fuel cell stack 12, passes through enclosure 20 and is released to the ambient environment via air outlet passage 34.

Blower 32 may be disposed external to enclosure 20 as shown in Figure 1, or alternatively, it may be disposed within enclosure 20. Blower 32 may be associated with a variable speed motor and motor controller (not shown) in order to allow the adjustment of the amount of air supplied to fuel cell system 1, e.g., in response to observed operational parameters, such as stack temperature, voltage, current, or another operational parameter such as the relative humidity of one or more reactant streams or system output. In alternative embodiments, fuel cell system 1 may include a sensor disposed in enclosure 20 or air supply passage 30 to detect the concentration of fuel within enclosure 20 or leaving enclosure 20. Where the concentration of fuel exceeds a preset level, the flow rate of air drawn into enclosure 20 may be increased in order to reduce the fuel concentration within enclosure 20 or air supply passage 30.

While those of ordinary skill in the art will appreciate that many factors are involved in the determination of an appropriate oxidant flow rate, the flow rate/volume of oxidant supplied to enclosure 20 is selected to ensure that the concentration of fuel within enclosure 20 and leaving enclosure 20 will be below the lower flammability limit, for example, such that the concentration of fuel within the enclosure 20 will be below about 25% of the lower flammability limit.

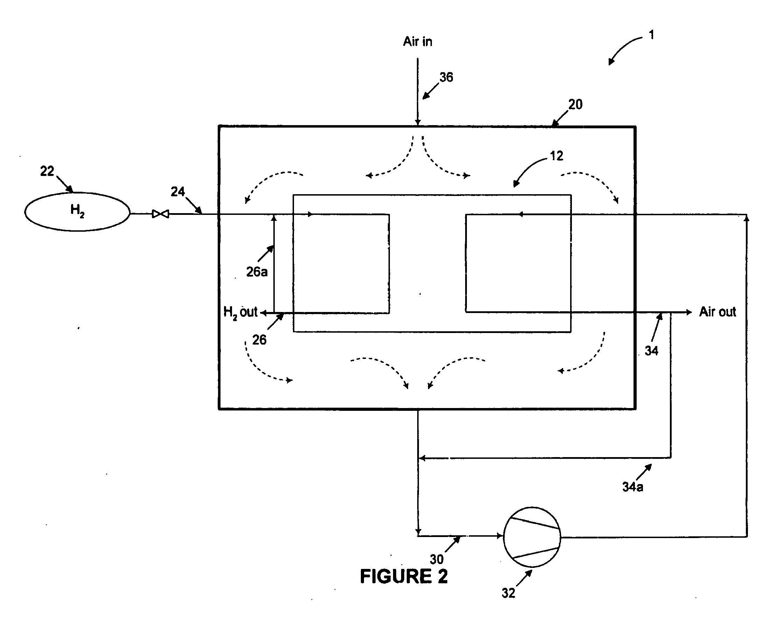

Although Figure 1 depicts an embodiment of fuel cell system 1 having a fuel outlet passage 26 and an air outlet passage 34, those of ordinary skill in the art will appreciate that in other embodiments elements of fuel cell system 1 may be dead-ended, such as on the fuel side. For example, as depicted in Figure 2, fuel cell system 1 may comprise an oxidant exhaust recycle passage 34a, whereby a portion of the oxidant exhaust is fed along with the mixture of fresh ambient air and fuel releases to blower 32, e.g, via a control restrictor (not shown). In such a system, the oxidant exhaust will also be thoroughly mixed with all of the incoming air/fuel release mixture, further diluting the released fuel. In another alternative embodiment (not shown), a portion of the oxidant exhaust may be recycled by releasing it directly to enclosure 20. Similarly, as further depicted in Figure 2, fuel cell system 1 may further comprise a fuel exhaust recycle passage 26a, whereby a portion of the fuel exhaust is mixed with fresh incoming fuel in fuel inlet passage 24.

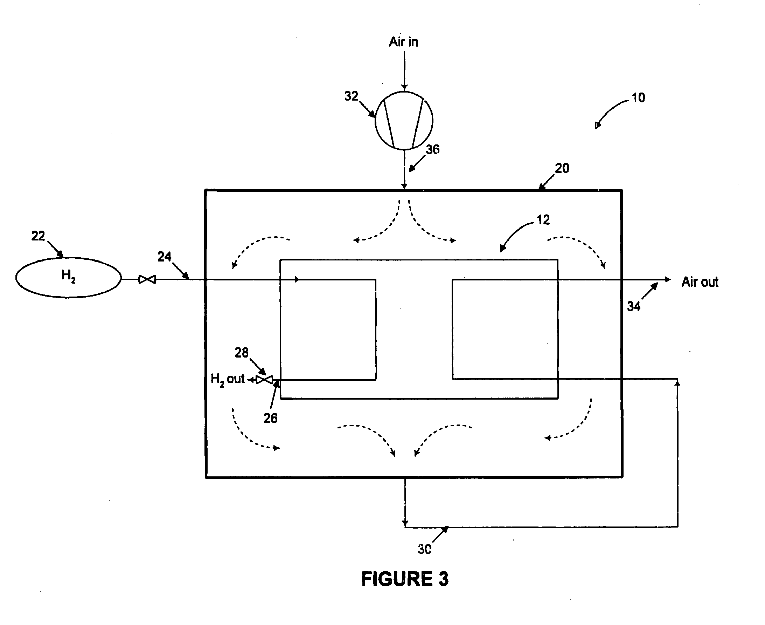

Figure 3 depicts an alternative embodiment of a fuel cell system 10 according to the present systems and methods, in which blower 32 is disposed upstream of enclosure 20 and the fuel side of fuel cell system 10 is configured for dead-ended operation. Incoming plant air is supplied to enclosure 20 via blower 32 and air inlet passage 36 where it mixes with any fuel releases, is drawn out of enclosure 20 via air supply passage 30 and is fed to fuel cell stack 12. Where it is desired to recycle a portion of the oxidant exhaust stream (not shown), an additional blower may be employed, e.g., disposed downstream of fuel cell stack 12. Again, if desired, a filter (not shown) may be disposed upstream of blower 32 to remove any particulates or other impurities from the ambient air that may be harmful to fuel cell system 10.

Fuel cell system 10 is dead-ended on the fuel side and includes a purge device 28. Those skilled in the art will appreciate that purge device 28 may take a number of forms, such as a valve or a multi-component system, as discussed below. In one embodiment, purge device 28 is normally closed during operation such that no fuel exhaust is released to enclosure 20, but may be opened periodically during operation to vent fuel exhaust into enclosure 20. Alternatively, purge device 28 may be configured to recycle at least a portion of the fuel exhaust to fuel inlet passage 24 (not shown). Purge device 28 may also be opened during particular operating modes of fuel cell system 10, such as during start-up or shutdown of fuel cell system 10. In an alternate embodiment, purge device 28 is controlled such that a portion of the fuel exhaust is continuously released to enclosure 20. The portion of fuel exhaust released may be varied in response to observed operational parameters, and/or during particular operating modes, such as start-up or shut-down of fuel cell system 10.

In other embodiments, fuel cell systems 1 and 10 may further comprise a humidification system, such as a gas to gas air humidifier to exchange humidity from, e.g., the oxidant exhaust stream in air outlet passage 34 to one or more reactant inlet streams.

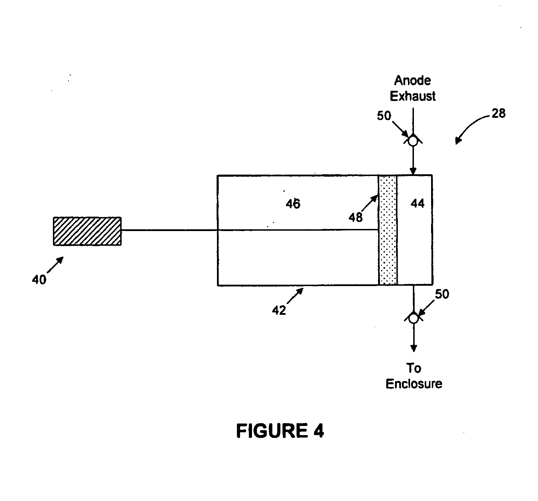

Figure 4 provides further detail as to one embodiment of multi- component purge device 28 that may be employed as part of the present systems and methods as an alternative to the valve shown in Figure 3. As shown in Figure 4, purge device 28 comprises a retention vessel 42, which is divided into two compartments 44, 46 by a plunger 48. Plunger 48 is coupled to a motor 40. Motor 40 may be a linear motor or other suitable motor as will be apparent to one of ordinary skill in the art. Those of ordinary skill in the art will appreciate that in alternative embodiments plunger 48 may be replaced with another device, such as, for example., a bellows disposed inside retention 42.

During normal operation, when a purge is desired, a control signal is sent to motor 40 to activate plunger 48. Plunger 48 moves to decrease the size of compartment 46 and increase the size of compartment 44 (i. e., as depicted in Figure 4, plunger 48 moves to the left), thereby drawing an amount of fuel exhaust into compartment 44. This drawing movement may be relatively quick, for example on the order of 1 to 3 seconds. Once the desired amount of fuel exhaust has been drawn into compartment 44, motor 40 allows plunger 48 to move in the opposite direction, releasing a specific amount of fuel exhaust to enclosure 20 at a controlled rate. The release movement of plunger 48 may be slow compared with the drawing movement of plunger 48, so as to release a very small amount of fuel to enclosure 20 at a time. For example, the system may be configured such that the release movement takes between 60 and 90 seconds to complete. This provides further assurance that the fuel releases will be thoroughly mixed with all of the incoming plant air, and that the flammability limits will not be exceeded in enclosure 20. During operation of plunger 48, one-way valves 50 ensure that the fuel exhaust moves in the desired direction. Those of ordinary skill in the art will appreciate that in other embodiments one-way valves 50 may be substituted with other devices, such as solenoid valves.

The capacity of retention vessel 42 may vary, depending on the system configuration. For example, retention vessel 42 may have a capacity 25 to 50% greater than that of the volume of the process fuel system, i. e., the total volume of fuel contained in fuel cell system 10 during normal operation. Thus, on start-up of fuel cell system 10, purge device 28 may be triggered so as to evacuate the entire volume of the process fuel system of fuel cell system 10. If fuel cell system 10 has not be operated for a significant period of time, this initial purge may primarily consist of, for example, a purge fluid that was used during shut-down of fuel cell system 10, or simply air that has filled the fuel side of fuel cell system 10 during the time fuel cell system 10 was not being operated. Purge device 28 may be configured so that the first release movement of plunger 48 is much quicker than subsequent release movements of plunger 48 during normal operation. In other embodiments, the capacity of retention vessel 42 may be smaller, for example, it may be of a size equivalent to the volume of the flow channels of the anode (s) fuel cell stack 12, which would allow a completely fresh stream of fuel to contact the anode catalyst. Alternatively, the capacity of retention vessel 42 may be minimal, with fuel system 1 being operated using a greater number of small volume purges.

Alternate embodiments of purge device 28 include, for example, configuring compartment 46 to be vented to enclosure 20 to reduce the pressure in compartment 46 as plunger 48 moves to draw fuel exhaust into compartment 44 and to capture any fuel that leaks from compartment 44 to compartment 46.

Purge device 28 may operate continuously, i.e., once the release movement is complete, the next draw movement may commence immediately. This may be desirable where the capacity of retention vessel 42 is small. Alternatively, purge device 28 may operate periodically, for example in response to a fuel cell operational parameter, at preset intervals or after a predetermined number of ampere- hours of operation. In other alternative embodiments, purge device 28 may operate during specific operational states, such as during shut-down, start-up or during periods of high or low load operation.

While according to the present systems and methods the reactants may be supplied to fuel cell stack 12 via internal (i.e., gas distributors for supply/removal of reactants to/from the stack are integrated into the stack) or external manifolds (i.e., gas distributors for supply!removal of reactants to/from the stack are mounted externally on the stack), internal manifolds may further reduce the risk of shortcircuiting of unintentional fuel releases and the creation of local hotspots.

The present systems and methods manage and mitigate fuel releases (both intentional and unintentional) by thoroughly mixing the fuel releases with the entirety of the incoming plant air, below the flammable limit. If blower 32 is disposed downstream of enclosure 20, for example, in air supply passage 30, the fuel releases are further mixed with the incoming plant air in blower 32 before the mixture is supplied to fuel cell stack 12. In contrast to prior art systems, because the fuel releases, whether intentional or unintentional, are combined and mixed with all of the incoming air, the releases are swept and diluted by the incoming air and consumed at the cathode. Thus, the present systems and methods ensure that any cathode catalyst surface will experience a low, thoroughly mixed nonflammable concentration of fuel. This ensures that the catalyst cannot act as an ignition source to produce a flame, and also avoids the creation of local hotspots in that the entire frontal area of the catalyst will be exposed to a low and uniform heat release and temperature rise well within its material temperature capability.

The various embodiments described above and in the applications and patents incorporated herein by reference can be combined to provide further embodiments. The described methods can omit some acts and can add other acts, and can execute the acts in a different order than that illustrated, to achieve the advantages of the invention.

These and other changes can be made to the invention in light of the above detailed description. In general, in the following claims, the terms used should not be construed to limit the invention to the specific embodiments disclosed in the specification, but should be construed to include all fuel cell systems, controllers and processors, actuators, and sensors that operate in accordance with the claims. Accordingly, the invention is not limited by the disclosure, but instead its scope is to be determined entirely by the following claims.

## Claims

1. A purging device (28) for a fuel cell system (1; 10), comprising a retention vessel (42) comprising an inlet, an outlet and means for drawing an amount of fuel exhaust into the purging device (28) via the inlet when operated in a first mode and for expelling the fuel exhaust out of the purging device (28) via the outlet when operated in a second mode.

2. The purging device of claim 1, wherein the means for drawing an amount of fuel exhaust into the purging device (28) via the inlet when operated in a first mode and for expelling the fuel exhaust out of the purging device (28) via the outlet when operated in a second mode comprises a plunger (48) disposed inside the retention vessel (42).

3. A fuel cell system comprising the purging device of any one of claims 1 or 2, wherein a volume of the retention vessel (42) is greater than a process fuel system volume.

4. The fuel cell system of claim 3, wherein the volume of the retention vessel (42) is between about 25 and 50 percent greater than the process fuel system volume.

5. The fuel cell system of any one of claims 3 or 4, further comprising:
a fuel cell stack (12) comprising a fuel supply passage and an oxidant supply passage;
the fuel supply passage comprising an anode inlet for directing a fuel stream to the fuel cell stack (12);
the oxidant supply passage comprising a cathode inlet for directing an oxidant stream to the fuel cell stack (12); and
an enclosure (20) disposed around the fuel cell stack (12), the enclosure (20) comprising
an enclosure inlet passage (36) in fluid communication with the interior of the enclosure (20) for introducing oxidant into the enclosure (20) ; and
an enclosure outlet passage (30) fluidly connected to the cathode inlet, for directing oxidant out of the enclosure (20) and to the cathode inlet.

6. The fuel cell system of any one of claims 3 to 5, further comprising a circulation device (32) configured to introduce oxidant into the enclosure inlet passage (36).

7. The fuel cell system of claim 6, wherein the circulation device (32) is disposed upstream of the enclosure inlet passage (36), wherein the circulation device (32) is disposed downstream of the enclosure inlet passage (36), wherein the circulation device (32) is disposed outside of the enclosure, or wherein the circulation device is disposed in the enclosure outlet passage (30), and/or wherein the circulation device (32) is selected from the group consisting of a blower, a pump and a fan.

8. The fuel cell system of any one of claims 3 to 7, wherein the fuel supply passage is closed, or wherein the fuel supply passage is dead-ended, and/or wherein the fuel supply passage comprises a fuel recirculation system (26a) for recycling at least a portion of a fuel exhaust stream, and/or wherein the fuel supply passage further comprises an anode outlet for directing at least a portion of a fuel exhaust stream to the interior of the enclosure (20).

9. The fuel cell system any one of claims 3 to 8, wherein the oxidant supply passage is configured to direct an oxidant exhaust stream out of the enclosure (20), and/or wherein the oxidant supply passage is configured to vent at least a portion of the oxidant exhaust stream to the interior of the enclosure (20).

10. The fuel cell system of any one of claims 3 to 9, further comprising a sensor disposed within the enclosure (20) for determining a concentration of fuel in the enclosure (20).
